(19) **Europäisches Patentamt**
**European Patent Office**
**Office européen des brevets**

(11) **EP 4 332 246 A1**

(12) **EUROPEAN PATENT APPLICATION**
published in accordance with Art. 153(4) EPC

(43) Date of publication:
06.03.2024 Bulletin 2024/10

(51) International Patent Classification (IPC):
$C21D\ 8/02^{(2006.01)}$      $C23C\ 2/06^{(2006.01)}$
$C22C\ 38/02^{(2006.01)}$      $C22C\ 38/04^{(2006.01)}$
$C22C\ 38/06^{(2006.01)}$      $C22C\ 38/60^{(2006.01)}$
$C23C\ 2/40^{(2006.01)}$

(21) Application number: 22795043.3

(22) Date of filing: 29.04.2022

(52) Cooperative Patent Classification (CPC):
C21D 8/02; C22C 38/02; C22C 38/04; C22C 38/06;
C22C 38/26; C22C 38/28; C22C 38/32;
C22C 38/38; C22C 38/44; C22C 38/46;
C22C 38/48; C22C 38/50; C22C 38/54;
C22C 38/58; C22C 38/60;        (Cont.)

(86) International application number:
PCT/CN2022/090627

(87) International publication number:
WO 2022/228574 (03.11.2022 Gazette 2022/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.04.2021 CN 202110480760

(71) Applicant: BAOSHAN IRON & STEEL CO., LTD.
Shanghai 201900 (CN)

(72) Inventors:
• LIU, Hao
Shanghai 201900 (CN)
• TAN, Ning
Shanghai 201900 (CN)
• HONG, Jiyao
Shanghai 201900 (CN)
• BI, Wenzhen
Shanghai 201900 (CN)

(74) Representative: Kuhnen & Wacker
Patent- und Rechtsanwaltsbüro PartG mbB
Prinz-Ludwig-Straße 40A
85354 Freising (DE)

(54) **HOT STAMPING COMPONENT HAVING TENSILE STRENGTH GREATER THAN OR EQUAL TO 1000 MPA AND FABRICATION METHOD THEREFOR**

(57) A hot stamping component having a tensile strength ≥1000 MPa and a fabrication method therefor. The chemical composition of said hot stamping component by weight percentage is as follows: 0.05-0.20% of C, 0.02-1.00% of Si, 0.5-2.0% of Mn, P≤0.10%, S≤0.05%, 0.01-0.30% of Al, 0.01-0.04% of Nb, 0.01-0.06% of Ti, 0.12-0.50% of Cr, and 0.001-0.05% of B, and the remainder is Fe and other inevitable impurities; in addition, the following must also be satisfied: 0.24%≤C+Mn/6≤0.45%, and 0.05%≤Nb+Ti+B×10≤0.15%. With regard to the obtained hot stamping component, the original austenite average grain size is ≤10 μm, the VDA cold bending angle is ≥80°, the room temperature impact toughness is ≥80 J/cm2, the yield strength is ≥800 MPa, the tensile strength is ≥1000 MPa, and the elongation at break is ≥6%. The hot stamping component has high toughness while also having high strength, and can therefore be widely applied in automobiles, ships, machinery, and other industries.

Fig. 1

(52) Cooperative Patent Classification (CPC): (Cont.)
**C23C 2/06; C23C 2/40;** Y02P 10/20

## Description

### Technical Field

The present disclosure pertains to the technical field of automotive materials, and particularly relates to a hot-stamped component having a tensile strength of $\geq$1000 MPa and a method for manufacturing the same.

### Background Art

As deterioration of natural environment and shortage of petroleum energy are increasingly aggravated, greenness and safety have become the main concerns that direct the development of the automobile manufacturing industry. The relevant research so far suggests that, while the strength of automotive steel is getting higher and higher, the cold stamping ability of steel plates, especially those having a tensile strength of greater than 1000 MPa, degrades significantly in a cold forming process. As a result, the dimensional accuracy of the formed parts is poor, and cracking even occurs at some locations. Hot-stamped components are characterized by high strength, good formability, and low resilience. Therefore, one of the important technical measures to reduce the weight of automotive structures is the use of hot-stamped products. Hot-stamped products can be widely used for structural members for safety, such as A/B pillars of a vehicle body in white, anti-collision beams, and center tunnels. Thus, there is an increasing market demand for hot-stamped products.

The hot-stamped products in the current market are mostly at a strength level of 1500 MPa. In respect of toughness, the VDA cold bending angle is about 50°, and the room temperature impact toughness is about 40J/cm$^2$. In contrast, 1000 MPa hot-stamped products exhibit higher toughness, and thus can be used for energy-absorbing parts that are more demanding for toughness. As regards material properties, a 1000 MPa grade high-toughness hot-stamped product shows higher collision performance. When it's used in a structural reinforcement member as an energy-absorbing area, it has the advantages of both high strength and good local collision resistance. According to the publications up to now, in order to impart high strength and high toughness to 1000 MPa strength grade hot-stamping steel, a number of expensive elements are incorporated in the composition design. A complicated process involving multi-stage control is often employed in the production thereof. Therefore, there are disadvantages in the prior art.

Chinese Patent CN107810281B discloses "steel for press hardening and press hardened part manufactured from such steel". Press hardened parts having a tensile strength of higher than 950 MPa and a cold bend angle of higher than 75° can be obtained. However, several micro-alloying elements are required in the composition design. In addition, high-temperature annealing treatment is employed in the steel plate production process, and two-stage cooling control is utilized in the hot stamping process for producing parts. As a result, the manufacturing process is complex, and there is great difficulty in practical operation.

Chinese Patent CN105829562B discloses "hot-pressed steel sheet member, method of manufacturing the same, and steel sheet for hot pressing". As an alloy component, 0.060-0.20% Ti element is added, and it is required that 90% of all Ti precipitates. In addition, as the process is concerned, two-stage cooling is adopted for cooling after hot stamping. The hot-stamped member only achieves a strength of 980 MPa or more. It's not mentioned whether the hot-stamped member has a high toughness.

Chinese Patent CN104838030B discloses "hot stamping product with enhanced toughness and method for manufacturing the same". In the design of the alloy components, B $\leq$ 0.001%. Other expensive alloys such as Mo are mainly relied upon to improve the ability to obtain martensite by quenching, and achieve high performances such as high strength.

In summary, the currently available traditional high-strength hot stamping steel has problems such as insufficient toughness and poor collision energy absorption effect.

### Summary

An object of the present disclosure is to provide a high-toughness hot-stamped component having a tensile strength of $\geq$1000MPa and a method for manufacturing the same. The hot-stamped component obtained has a yield strength of $\geq$800MPa, a tensile strength of $\geq$1000MPa, an elongation at break of $\geq$6%, a VDA cold bending angle of $\geq$ 80°, and a room temperature impact toughness of $\geq$ 80 J/cm$^2$. The hot-stamped component has both high strength and high toughness. It solves the problems of insufficient toughness and poor collision energy absorption effect of the existing high-strength hot-stamped components. Hence, it can be widely used in automobile, shipbuilding, machinery and other industries.

To achieve the above object, the technical solution provided according to the present disclosure is as follows:

A hot-stamped component having a tensile strength of $\geq$1000MPa, wherein the hot-stamped component has a chemical composition comprising by weight percent: C: 0.05-0.20%, Si: 0.02-1.00%, Mn: 0.5-2.0%, P≤0.10%, S≤0.05%, Al: 0.01-0.30%, Nb: 0.01-0.04%, Ti: 0.01-0.06%, Cr: 0.12-0.50%, B: 0.001-0.05%, and a balance of Fe and unavoidable impurities, wherein the following are satisfied at the same time:

$$0.24\% \leq C+Mn/6 \leq 0.45\%;$$

$$0.05\% \leq Nb+Ti+B \times 10 \leq 0.15\%;$$

the hot-stamped component has an average grain size of original austenite of ≤10 μm, a VDA cold bending angle of ≥80°, and a room temperature impact toughness of ≥80 J/cm$^2$.

Further, the composition of the hot-stamped component may also comprise one or more of Ni: 0.01-1.0%, Mo: 0.01-0.5%, and V: 0.01-0.5% by weight percent.

Preferably, P≤0.05%.

Preferably, S≤0.01%.

In the microstructure of the hot-stamped component of the present disclosure, martensite and bainite account for ≥75% by area, and the remainder consists of ferrite, retained austenite or a mixture thereof.

The hot-stamped component of the present disclosure has a yield strength of ≥ 800 MPa, a tensile strength of ≥ 1000 MPa and an elongation at break of ≥6%.

In some embodiments, the hot-stamped component of the present disclosure has a yield strength of ≥ 830 MPa, a tensile strength of ≥ 1020 MPa and an elongation at break of ≥7.0%. In some embodiments, the hot-stamped component of the present disclosure has a yield strength of 830-1150 MPa, a tensile strength of 1020-1300 MPa and an elongation at break of 7.0-9.0%.

In some embodiments, the VDA cold bending angle of the hot stamped component of the present disclosure is ≥85°. In some embodiments, the VDA cold bending angle of the hot stamped component of the present disclosure is ≥90°. In some embodiments, the VDA cold bending angle of the hot stamped component of the present disclosure is 85-120°.

In some embodiments, the room temperature impact toughness of the hot stamped component of the present disclosure is ≥85 J/cm$^2$. In some embodiments, the room temperature impact toughness of the hot stamped component of the present disclosure is ≥ 90J/cm$^2$. In some embodiments, the room temperature impact toughness of the hot stamped component of the present disclosure is 80-115 J/cm$^2$.

In the composition design according to the present disclosure:

C: It is a key element for promoting strength and hardness. The carbon content is not less than 0.05% to guarantee the strength and hardenability of a steel plate used to make the hot-stamped component, so that the tensile strength of the hot-stamped component can meet the target requirement. On the other hand, as the carbon content increases, the plasticity, toughness and weldability of the hot-stamped component will be deteriorated. Therefore, the C content is controlled in the range for 0.05-0.20% in the present disclosure.

Si: Addition of a certain amount of Si allows for dissolution of Si in ferrite and austenite to increase the strength and hardness of the hot-stamped component. If the Si content exceeds 1.0%, the platability of the hot-stamped component will be affected. Therefore, the Si content is controlled in the range of 0.02-1.0% in the present disclosure. In some embodiments, the Si content is 0.05-0.7%.

Mn: It has the functions of deoxygenation and desulfurization, and it can also improve the hardness and strength of the hot-stamped component. Mn is a strong element for stabilizing austenite. It can significantly increase the hardenability of the hot-stamped component. In order to guarantee the strength of the hot-stamped component, the Mn content in the steel should not be less than 0.5%. On the other hand, if the Mn content is higher than 2.0%, the manufacturability and weldability of the hot-stamped component will be deteriorated. Therefore, the Mn content is controlled in the range of 0.5-2.0% in the present disclosure.

C+Mn/6 is an important member of the alloy components, and it is closely related with the strength, toughness and weldability of the material. In the case of C+Mn/6< 0.24%, a high tensile strength of the hot-stamped component cannot be guaranteed, and the ability of the material to obtain martensite is insufficient. In the case of C+Mn/6> 0.48%, the contents of C and Mn in the martensitic structure of the hot-stamped component are high. That is, it's easy to obtain high carbon martensite which will significantly deteriorate the toughness of the material. In addition, if C+Mn/6 is higher than 0.45%, the weldability will be deteriorated significantly. Therefore, it's controlled to be 0.24% ≤ C + Mn/6 ≤ 0.45% in the present disclosure.

P, S: P and S are harmful elements. The segregation of P element will cause cold brittleness in the hot-stamped component; and the segregation of S at high temperature will reduce the plasticity and even cause hot brittleness. The inventive design is mainly aimed to significantly improve the toughness of the material. It is necessary to control $P \leq 0.10\%$ and $S \leq 0.05\%$, preferably $P \leq 0.05\%$ and $S \leq 0.01\%$.

Al: As a deoxygenation element, the most preferred content of Al in the hot-stamped component is 0.01% or higher. However, if the hot-stamped component contains too much Al, coarse oxides will be formed, thereby deteriorating the overall performances of the hot-stamped component. Therefore, the Al content is controlled in the range of 0.01-0.3% in the present disclosure. In some embodiments, the Al content is 0.01-0.25%.

Nb: It is an important micro-alloying element. On the one hand, Nb plays a role in solid solution strengthening; on the other hand, Nb has an extremely strong ability to bond with C and N to form stable compounds, thereby refining grains, and improving the strength and toughness of the hot-stamped component. At the same time, the hot-stamped component is provided with good cold bending performance. In addition, the carbonitride of Nb acts as a hydrogen trap to reduce the susceptibility to hydrogen-induced delayed cracking. Therefore, the Nb content is controlled in the range of 0.01-0.04% in the present disclosure. If it is lower than 0.01%, the effect of grain refining is insufficient, and if it is higher than 0.04%, the product cost will be high.

Ti: It is an important micro-alloying element. It has a strong affinity with nitrogen, oxygen, and carbon. It is a good element that is effective in deoxygenation and nitrogen immobilization, thereby preventing formation of BN from boron and nitrogen. In addition, Ti has the effect of grain refining, and thus improves the toughness of the material. However, if the Ti content is too high, massive nitrides tend to be formed and deteriorate the toughness and plasticity. Therefore, the Ti content is controlled in the range of 0.01 to 0.06% in the present disclosure, which can improve the toughness and plasticity of the hot-stamped component.

B: The main function of B is to increase the hardenability of steel greatly, thereby saving other expensive metals. B is added in an amount that is in an optimal range for improving hardenability. If more than a certain amount of B is added, the effect of increasing hardenability is not obvious. Therefore, the B content is controlled in the range of 0.001-0.05% in the present disclosure. In some embodiments, the B content is 0.001-0.005%.

Among the components of the hot-stamped component, Nb, Ti, and B elements can significantly refine the grain structure of the hot-stamped component from different aspects. The carbonitrides precipitated by Nb/Ti can all refine the grains in the production of the hot-stamped component. B improves hardenability. These two effects combine to improve toughness. Nb and Ti have similar effects, and they are added in amounts of the same order of magnitude. In contrast, a trace amount of B can significantly improve hardenability. In the case of $Nb+Ti+B \times 10 < 0.05\%$, the structure of the hot-stamped component cannot be refined significantly. Especially, the average grain size of the original austenite is greater than 10 $\mu$m, and thus high toughness cannot be achieved. In the case of $Nb+Ti+B \times 10 > 0.15\%$, on the one hand, the refinement effect is not obvious with further increase of the alloying elements, and on the other hand, the alloying cost is increased. Therefore, their contents are controlled to be $0.05\% \leq Nb+Ti+B \times 10 \leq 0.15\%$ in the present disclosure.

Cr: It can effectively improve the hardenability of the hot-stamped component. Similar to the function of Mn, Cr further improves the strength and toughness of the hot-stamped component. Moreover, addition of Cr element can prevent surface oxidation at high temperature in the heating procedure of the subsequent hot stamping process. Therefore, the Cr content is controlled in the range of 0.12-0.5% in the present disclosure.

Ni, Mo and V: They are all stable elements that are effective in guaranteeing the strength and toughness of the hot-stamped component. Ni can improve the strength of steel and reduce the low-temperature brittle transition temperature of steel, which is of great significance in improving impact toughness. Mo can significantly improve the hardenability of steel, refine austenite grains, prevent temper brittleness, and improve the strength and toughness of the hot-stamped component. V refines the austenite grains by means of fine carbonitrides and improves the toughness of steel. Therefore, Ni, Mo, and V can all ensure that the hot-stamped component has both high strength and good toughness.

With the alloying cost and the saturation of the effects of the elements in the steel taken into consideration, one or more alloying components selected from Ni: 0.01-1.0%, Mo: 0.01-0.5%, and V: 0.01-0.5% may be included in the present disclosure. In some embodiments, in the steel of the present disclosure, $Ni \leq 0.3\%$, $Mo \leq 0.3\%$, and $V \leq 0.2\%$.

The composition of the present disclosure is designed mainly based on the concept of low-carbon micro-alloying. The hardenability is increased by C solid solution strengthening and C/Mn compounding, so as to guarantee the required strength of the hot-stamped component. Trace amounts of micro-alloying elements such as Nb, Ti, B and the like are added to further significantly refine the grain size of the hot-stamped component, including the grain size of original austenite, so as to obtain the high-strength, high-toughness hot-stamped component. It is preferable to partially add alloying elements of Ni, Mo, V and the like to further improve the strength and toughness of the hot-stamped component.

The method for manufacturing a hot-stamped component having a tensile strength of 1000 MPa according to the present disclosure includes the following steps:

1) Smelting and casting

smelting and casting the above composition into a slab;

2) Hot rolling, coiling and pickling

wherein the slab has a temperature of 1100-1260°C when it leaves the furnace in which it is heated, and the finishing rolling temperature is 830-880°C;
wherein the coiling temperature is 580-650°C, and then a hot-rolled slab is obtained after pickling;

3) Cold rolling and annealing
wherein the total cold rolling reduction rate is 40-80%, and the annealing temperature is 720-780°C;

4) Hot stamping forming

wherein the heating temperature of the steel plate after annealing is $Ac_3$ - 960°C, and the heating time is 2-10min;
then it is transferred to a mold for stamping forming, wherein the forming temperature is ≥700 °C;
wherein the steel plate is then cooled to 200 °C or lower at a cooling rate of greater than 30°C/s to obtain the hot-stamped component.

In some embodiments, the slab has a temperature of 1150-1260°C when it leaves the furnace in which it is heated.

Further, in step 3), martensite and carbide particles distributed dispersively like a network in the structure of the annealed steel plate accounts for 10-40% by area, and the area of a single martensite or carbide particle is less than 25 $\mu$m$^2$.

Still further, in step 3), no less than 80% of the grains in the structure of the annealed steel plate have an aspect ratio of 0.5-2.0.

Yet still further, after the annealing in step 3), the steel plate is plated to obtain a plated steel plate, and an average weight of the plating layer at one side is 20-120 g/m$^2$.

Preferably, the plating layer is a pure zinc plating layer, a zinc-iron alloy plating layer, a zinc-based alloy plating layer containing Al and Mg, or an aluminum-silicon alloy plating layer.

Further, before the hot stamping forming in step 4), the steel plate is welded with another steel plate of a different strength grade for making a hot-stamped component by a laser tailor welding technology to form a tailor welded component.

In some embodiments, the heating time in step 4) is 200-600 s.

In some embodiments, the heating temperature in step 4) is 700-820 °C.

In some embodiments, the cooling rate in step 4) is 35-60 °C/s.

A steel blank is prepared according to the above composition, and then an unplated steel plate is obtained by hot rolling, cold rolling, and annealing; or a plated steel plate is obtained by plating the steel plate in any way after hot-rolling, cold rolling, and annealing.

The production process of the hot-stamped component is controlled in the present disclosure. Particularly, the billet to be hot rolled has a temperature of 1100-1260°C when it leaves the furnace in which it's heated. If the heating temperature is lower than 1100°C, the micro-alloying elements cannot be fully dissolved. If the heating temperature is higher than 1260°C, the grains will coarsen easily, and the toughness will deteriorate. The finishing rolling temperature is controlled in the range of 830-880°C to ensure that the finishing rolling is performed in the non-recrystallization zone of austenite, so as to refine the grain structure.

Because trace amounts of Nb and Ti are added as micro-alloying elements in the present disclosure, in order to precipitate more carbides of niobium and titanium during the coiling process, the coiling temperature is controlled in the range of 580-650°C, which allows for a higher proportion of nanoscale NbC and TiC precipitates. The resulting NbC and TiC inhibit growth of the original austenite grains during the heating procedure in the subsequent hot stamping process, which is beneficial to refining the size of the original austenite grains. If the coiling temperature is lower than 580°C, the carbides of niobium and titanium cannot achieve good precipitation effect, and the strength of the hot-rolled steel plate is rather high, thereby increasing the difficulty in cold rolling in the manufacturing process. If the coiling temperature is higher than 650°C, on the one hand, the grains are coarsened, which is not conducive to the control of grain refinement throughout the process; on the other hand, local oxidation will occur on the surface of the steel plate, which is not conducive to the control of the subsequent pickling process and will affect the platability of the steel plate.

The total cold rolling reduction rate is controlled in the range of 40-80%. If the total cold rolling reduction rate is less than 40%, the fragmentation degree of the structure will be low, such that the grain refinement effect is not obvious. If the total cold rolling reduction rate is greater than 80%, the residual hardness inside the steel plate will be large, and there will be many banded structures, which is not conducive to the subsequent process of the production and will significantly worsen the toughness of the hot-stamped component.

The annealing after the hot rolling is to further control the size and shape of the grains in the steel plate to ensure that the hot-stamped component can obtain high toughness. According to the composition design, the annealing temperature is controlled in the range of 720-780°C to ensure that at least 80% of the grains in the structure of the steel plate obtained after annealing are approximately equiaxed, i.e., the aspect ratio of the grains satisfies 0.5-2.0. A higher proportion of equiaxed grains can reduce the banded structure and refine the original structure of the steel plate. Subsequently, the structure of the hot-stamped component can be refined. If the annealing temperature is higher than 780°C, the grain size will be increased notably.

When the annealing temperature is controlled in the range of 720-780°C, fine martensite and carbide particles are distributed dispersively along the ferrite grain boundaries in the structure. Both martensite and carbides are carbon-rich phases. In addition, fine particles having an area of less than 25 $\mu m^2$ account for 10-40% of the structure, significantly increasing the effective grain boundary area. The carbon-rich phases and the effective grain boundaries are preferential nucleation points of austenite. They help to increase the austenite nucleation rate, promote nucleation and refine the original austenite grain size. If the martensite and carbide particles in the structure account for more than 40% by area, the performances of the annealed steel plate will be rather high, which is not conducive to subsequent blanking and processing. If the martensite and carbide particles in the structure account for less than 10% by area, the grain boundary area cannot be increased effectively. In view of the fact that a high-toughness hot-stamped component can be obtained only when the grain size is controlled as discussed above, the steel plate needs to be annealed at 720-780°C.

If the heating temperature is lower than $AC_3$ in the step of hot stamping the steel plate in the present disclosure, the structure of the steel plate cannot be completely austenitized. If the heating time is less than 2 minutes, austenitization of the steel plate and dissolution of the carbides will be insufficient. If the hot stamping temperature is higher than 960°C or the heating time exceeds 10 minutes, the austenite grains will become coarse, which will lead to significant reduction of the toughness of the hot-stamped component. If the deformation temperature of the steel plate is lower than 700°C, it will be difficult to deform the steel plate, and there is a tendency to precipitate more ferrite and other structures. Subsequently, the cooling rate after the hot stamping forming needs to be controlled to be greater than 30°C/s, which is the critical cooling rate to obtain the martensitic structure. The hot-stamped component is quenched and cooled to 200°C or less to ensure that the strength and toughness of the hot-stamped component meet the designed requirements.

The steel plate obtained after annealing may be an unplated bare plate. Alternatively, in order to reduce the impact of iron oxide scale on the heated surface of the steel plate and subsequent poor corrosion resistance, the surface of the steel plate may be plated with an alloy plating layer. The plating amount of the plating layer is controlled in the range of 20-120 g/m$^2$. If the plating amount of the plating layer is less than 20 g/m$^2$, it will be difficult to control the on-site production, and the anti-corrosion effect of the hot-stamped component will be poor. If the plating amount of the plating layer is greater than 120 g/m$^2$, the anti-corrosion effect will be saturated, and the cost will increase.

The plating layer may be a pure zinc plating layer. Alternatively, it may be a zinc-iron alloy plating layer, such as Zn-Fe, Zn-Al, Zn-Mg, Zn-Al-Mg and other alloy plating layers. It may also be a zinc-based alloy plating layer containing Al and Mg, or an aluminum-silicon alloy plating layer, for example, an aluminum-silicon alloy plating layer containing 0-4% Fe, 5-11% Si, and a balance of aluminum and unavoidable impurities.

The beneficial effects of the present disclosure include:
The composition of the present disclosure is designed mainly based on the concept of low-carbon micro-alloying. The hardenability is increased by C solid solution strengthening and C/Mn compounding, so as to guarantee the required strength of the hot-stamped component. By adding trace amounts of micro-alloying elements such as Nb, Ti, B and the like, and controlling 0.24%≤C+Mn/6≤0.45% and 0.05%≤Nb+Ti+B×10≤0.15%, the grain size of the hot-stamped component is refined significantly, so as to ensure that the average grain size of the original austenite in the hot-stamped component is ≤10μm, thereby improving the toughness of the high-strength hot-stamped component. As such, the problems of insufficient toughness and poor collision energy absorption effect of the existing high-strength hot-stamped components are solved. Hence, the hot-stamped component of the present disclosure can be widely used in automobile, shipbuilding, machinery and other industries.

In the preparation process of the present disclosure, because trace amounts of micro-alloying ingredients are added in the present disclosure, and the coiling temperature is controlled in the range of 580-650°C, it is ensured that NbC and TiC precipitate in higher proportions. The resulting NbC and TiC inhibit growth of the original austenite grains during the heating procedure in the subsequent hot stamping process, thereby refining the size of the original austenite grains. Further, the annealing temperature is controlled in the range of 720-780°C to ensure that at least 80% of the grains in the structure of the steel plate obtained after annealing are approximately equiaxed, so as to ensure that the size of the original austenite grains is refined after the steel plate is hot stamped. The average grain size of the original austenite is ≤10 μm, which greatly improves the toughness of the high-strength hot-stamped component. The hot-stamped component obtained has a yield strength of ≥ 800 MPa, and a tensile strength of ≥ 1000 MPa. Moreover, the hot-stamped component has a VDA cold bending angle of ≥ 80°, and a room temperature impact toughness of ≥80 J/cm$^2$.

**Description of the Drawings**

Fig. 1 is a scanning electron microscope photograph of the microstructure of a hot-stamped component according to an Example of the present disclosure.
Fig. 2 is a photograph of the original austenite structure in a hot-stamped component according to an Example of the present disclosure.
Fig. 3 is a photograph of the metallographical structure of a steel plate after annealing according to an Example of the present disclosure.

**Detailed Description**

The disclosure will be further illustrated with reference to the following specific Examples. In the Examples, VDA cold bending angle test standard: VDA238-100 Plate Bending Test For Metallic Materials; impact toughness test standard: GB/T 229 Metallic Materials Charpy Pendulum Impact Test Method; mechanical properties test standard: GB/T 228.1 Metallic Materials Tensile Testing Part 1: Method of Test at Room Temperature.

The specific compositions and process parameters of the Examples of the present disclosure are shown in Table 1 and Table 2, and the performances of the hot-stamped component of each Example are shown in Table 3.

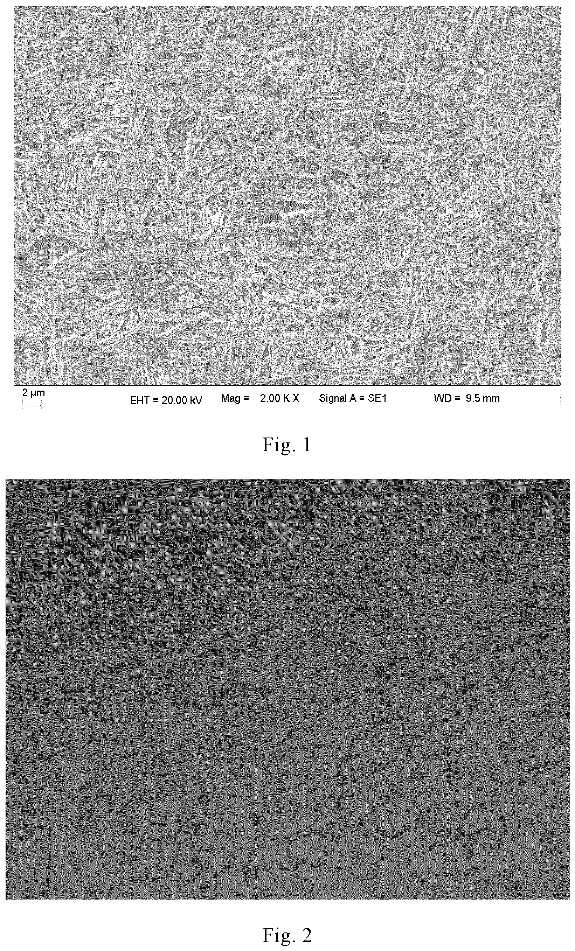

Fig. 1 shows the scanning electron microscope photograph of the microstructure of the hot-stamped component. As it can be seen from Fig. 1, the microstructure of the hot-stamped component obtained according to the present disclosure consists of martensite, bainite and trace retained austenite, wherein the area of martensite and bainite accounts for $\geq 75\%$.

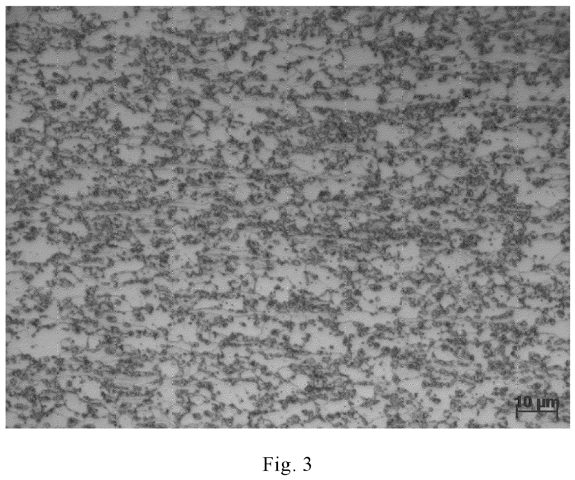

It can be observed in Fig. 2 that the average grain size of the original austenite is $\leq 10\ \mu m$. It can be observed in Fig. 3 that about 85% of the grains in the structure of the annealed steel plate have an aspect ratio that satisfies 0.5-2.0, wherein martensite and carbide particles are distributed dispersively like a network; the area of martensite and carbide particles accounts for greater than 25%, and the area of a single particle is less than $25\ \mu m^2$.

As it can be seen from the performances listed in Table 3, the hot-stamped components prepared according to the present disclosure have a yield strength of $\geq 800$ MPa, a tensile strength of $\geq 1000$ MPa, a VDA cold bending angle of $\geq 80°$, a room temperature impact toughness of $\geq 80\ J/cm^2$, and an elongation at break of $\geq 6\%$.

Table 1 (unit: weight%)

|  | C | Si | Mn | P | S | Al | Nb | Ti | B | Cr | Ni | V | Mo |
|---|---|---|---|---|---|---|---|---|---|---|---|---|---|
| Ex. 1 | 0.06 | 0.32 | 1.93 | 0.006 | 0.010 | 0.03 | 0.04 | 0.04 | 0.004 | 0.30 | 0.15 | - | - |
| Ex. 2 | 0.07 | 0.68 | 1.68 | 0.005 | 0.002 | 0.22 | 0.03 | 0.02 | 0.003 | 0.45 | - | - | - |
| Ex. 3 | 0.08 | 0.36 | 1.72 | 0.005 | 0.003 | 0.03 | 0.02 | 0.03 | 0.003 | 0.20 | - | - | - |
| Ex. 4 | 0.09 | 0.36 | 1.88 | 0.006 | 0.003 | 0.03 | 0.03 | 0.03 | 0.004 | 0.15 | - | - | 0.10 |
| Ex. 5 | 0.12 | 0.25 | 1.38 | 0.006 | 0.008 | 0.03 | 0.02 | 0.04 | 0.004 | 0.25 | 0.10 | - | - |
| Ex. 6 | 0.13 | 0.58 | 1.26 | 0.005 | 0.004 | 0.05 | 0.03 | 0.06 | 0.005 | 0.18 | - | - | 0.15 |
| Ex. 7 | 0.15 | 0.35 | 1.35 | 0.006 | 0.005 | 0.10 | 0.01 | 0.05 | 0.002 | 0.24 | - | 0.20 | - |
| Ex. 8 | 0.15 | 0.50 | 1.00 | 0.004 | 0.003 | 0.03 | 0.02 | 0.05 | 0.002 | 0.15 | - | - | 0.30 |
| Ex. 9 | 0.16 | 0.42 | 1.00 | 0.005 | 0.003 | 0.15 | 0.03 | 0.04 | 0.003 | 0.12 | - | - | - |
| Ex. 10 | 0.18 | 0.05 | 0.55 | 0.007 | 0.005 | 0.04 | 0.03 | 0.03 | 0.002 | 0.14 | 0.30 | - | 0.10 |

Table 2

| | Temperature of slab leaving furnace °C | Finishing rolling temperature °C | Coiling temperature °C | Total cold rolling reduction rate % | Annealing temperature °C | Heating temperature in hot stamping °C | Heating time s | Forming temperature °C | Cooling rate °C/s |
|---|---|---|---|---|---|---|---|---|---|
| Ex. 1 | 1180 | 850 | 580 | 60 | 760 | 920 | 300 | 750 | 35 |
| Ex. 2 | 1160 | 860 | 630 | 70 | 740 | 950 | 280 | 780 | 40 |
| Ex. 3 | 1260 | 840 | 620 | 65 | 780 | 930 | 250 | 760 | 38 |
| Ex. 4 | 1180 | 870 | 640 | 75 | 750 | 920 | 290 | 820 | 35 |
| Ex. 5 | 1190 | 870 | 650 | 45 | 740 | 960 | 220 | 770 | 46 |
| Ex. 6 | 1220 | 830 | 650 | 55 | 730 | 940 | 380 | 740 | 50 |
| Ex. 7 | 1160 | 830 | 630 | 42 | 720 | 930 | 420 | 790 | 40 |
| Ex. 8 | 1230 | 850 | 600 | 45 | 770 | 920 | 260 | 720 | 52 |
| Ex. 9 | 1150 | 860 | 640 | 42 | 760 | 900 | 360 | 750 | 50 |
| Ex. 10 | 1200 | 860 | 620 | 40 | 740 | 880 | 560 | 715 | 45 |

Table 3

| | Yield strength MPa | Tensile strength MPa | Elongation at break (%) % | VDA cold bending angle ° | Room temperature impact toughness J/cm$^2$ |
|---|---|---|---|---|---|
| Ex. 1 | 836 | 1027 | 8.5 | 118 | 112 |
| Ex. 2 | 875 | 1068 | 9.0 | 108 | 104 |
| Ex. 3 | 924 | 1105 | 6.5 | 97 | 92 |
| Ex. 4 | 998 | 1172 | 9.0 | 116 | 104 |
| Ex. 5 | 1008 | 1116 | 7.5 | 102 | 92 |
| Ex. 6 | 1021 | 1123 | 7.0 | 98 | 96 |
| Ex. 7 | 1066 | 1189 | 8.0 | 95 | 89 |
| Ex. 8 | 1052 | 1136 | 8.5 | 105 | 104 |

(continued)

| | Yield strength MPa | Tensile strength MPa | Elongation at break (%) % | VDA cold bending angle ° | Room temperature impact toughness J/cm$^2$ |
|---|---|---|---|---|---|
| Ex. 9 | 1078 | 1198 | 7.0 | 88 | 92 |
| Ex. 10 | 1106 | 1297 | 7.0 | 90 | 88 |

**Claims**

1. A hot-stamped component having a tensile strength of ≥1000 MPa, wherein the hot-stamped component has a chemical composition comprising by weight percent: C: 0.05-0.20%, Si: 0.02-1.00%, Mn: 0.5-2.0%, P≤0.10%, S≤0.05%, Al: 0.01-0.30%, Nb: 0.01-0.04%, Ti: 0.01-0.06%, Cr: 0.12-0.50%, B: 0.001-0.05%, and a balance of Fe and unavoidable impurities, wherein the following are satisfied at the same time:

   0.24%≤C+Mn/6≤0.45%;
   0.05%≤Nb+Ti+B×10≤0.15%;
   the hot-stamped component has an average grain size of original austenite of ≤10 μm, a VDA cold bending angle of ≥80°, and a room temperature impact toughness of ≥80 J/cm$^2$.

2. The hot-stamped component having a tensile strength of ≥1000 MPa according to claim 1, wherein the composition of the hot-stamped component further comprises one or more of Ni: 0.01-1.0%, Mo: 0.01-0.5%, and V: 0.01-0.5% by weight percent.

3. The hot-stamped component having a tensile strength of ≥1000 MPa according to claim 1, wherein P≤0.05% and/or S≤0.01%.

4. The hot-stamped component having a tensile strength of ≥1000 MPa according to claim 1, wherein the content of Si is 0.05-0.7%; and/or the content of Al is 0.01-0.25%; and/or the content of B is 0.001-0.005%.

5. The hot-stamped component having a tensile strength of ≥1000 MPa according to any one of claims 1-4, wherein martensite and bainite account for ≥75% by area in a microstructure of the hot-stamped component; and a remainder of the microstructure consists of ferrite, retained austenite or a mixture thereof.

6. The hot-stamped component having a tensile strength of ≥1000 MPa according to any one of claims 1-5, wherein the hot-stamped component has a yield strength of ≥ 800 MPa, a tensile strength of ≥ 1000 MPa and an elongation at break of ≥6%.

7. The hot-stamped component having a tensile strength of ≥1000 MPa according to claim 6, wherein the hot-stamped component has a yield strength of ≥ 830 MPa, a tensile strength of ≥ 1020 MPa and an elongation at break of ≥7.0%.

8. The hot-stamped component having a tensile strength of ≥1000 MPa according to claim 7, wherein the hot-stamped component has a yield strength of 830-1150 MPa, a tensile strength of 1020-1300 MPa and an elongation at break of 7.0-9.0%.

9. The hot-stamped component having a tensile strength of ≥1000 MPa according to any one of claims 1-7, wherein the VDA cold bending angle of the hot stamped component is ≥ 85°, preferably ≥90°, more preferably 85-120°; and/or the room temperature impact toughness of the hot stamped component is ≥85 J/cm$^2$, preferably ≥ 90J/cm$^2$, more preferably 80-115 J/cm$^2$.

10. A method for manufacturing the hot-stamped component having a tensile strength of ≥1000 MPa according to any one of claims 1-9, wherein the method comprises the following steps:

    1) Smelting and casting

Smelting and casting the composition in any one of claims 1-4 into a slab;
2) Hot rolling, coiling and pickling

> wherein the slab has a temperature of 1100-1260 °C when it leaves a furnace in which it is heated, and a finishing rolling temperature is 830-880 °C;
> wherein a coiling temperature is 580-650 °C, and then a hot-rolled slab is obtained after pickling;

3) Cold rolling and annealing
wherein a total cold rolling reduction rate is 40-80%, and an annealing temperature is 720-780°C;
4) Hot stamping forming

> wherein a steel plate obtained after the annealing is heated to $Ac_3$~960°C, and a heating time is 2-10 min; then it is transferred to a mold for stamping forming, wherein a forming temperature is ≥700 °C;
> wherein the hot-stamped component is obtained after cooling to 200 °C or lower at a cooling rate of greater than 30°C/s.

11. The method for manufacturing the hot-stamped component having a tensile strength of ≥1000 MPa according to claim 10, wherein in step 3), martensite and carbide particles distributed dispersively like a network in a structure of the steel plate after the annealing accounts for 10-40% by area, and an area of a single martensite or carbide particle is less than 25 $\mu$m$^2$.

12. The method for manufacturing the hot-stamped component having a tensile strength of ≥1000 MPa according to claim 10 or 11, wherein in step 3), no less than 80% of grains in a structure of the steel plate after the annealing have an aspect ratio of 0.5-2.0.

13. The method for manufacturing the hot-stamped component having a tensile strength of ≥1000 MPa according to claim 10, wherein after the annealing in step 3), the steel plate is plated to obtain a steel plate comprising a plating layer, and an average weight of the plating layer at one side is 20-120 g/m$^2$.

14. The method for manufacturing the hot-stamped component having a tensile strength of ≥1000 MPa according to claim 11, wherein the plating layer is a pure zinc plating layer, a zinc-iron alloy plating layer, a zinc-based alloy plating layer containing Al and Mg, or an aluminum-silicon alloy plating layer.

15. The method for manufacturing the hot-stamped component having a tensile strength of ≥1000 MPa according to claim 10 or 11 or 12, wherein before the hot stamping forming in step 4), the steel plate is welded with another steel plate of a different strength grade for making a hot-stamped component by a laser tailor welding technology to form a tailor welded component for hot stamping.

2 µm　　　EHT = 20.00 kV　　Mag = 2.00 K X　　Signal A = SE1　　WD = 9.5 mm

Fig. 1

10 µm

Fig. 2

Fig. 3

## INTERNATIONAL SEARCH REPORT

| International application No. |
| --- |
| **PCT/CN2022/090627** |

**A. CLASSIFICATION OF SUBJECT MATTER**

C21D 8/02(2006.01)i; C23C 2/06(2006.01)i; C22C 38/02(2006.01)i; C22C 38/04(2006.01)i; C22C 38/06(2006.01)i; C22C 38/60(2006.01)i; C23C 2/40(2006.01)i

According to International Patent Classification (IPC) or to both national classification and IPC

**B. FIELDS SEARCHED**

Minimum documentation searched (classification system followed by classification symbols)

C22C; C23C; C21D

Documentation searched other than minimum documentation to the extent that such documents are included in the fields searched

Electronic data base consulted during the international search (name of data base and, where practicable, search terms used)

DWPI, CNKI, EPODOC, CNABS, CNTXT: 热冲压, 铌, 钛, 硼, hot stamp+, nb, niobium, Ti, titanium, B, boron

**C. DOCUMENTS CONSIDERED TO BE RELEVANT**

| Category* | Citation of document, with indication, where appropriate, of the relevant passages | Relevant to claim No. |
| --- | --- | --- |
| X | CN 109371325 A (BAOSHAN IRON & STEEL CO., LTD.) 22 February 2019 (2019-02-22) description, paragraphs 7-10 and 33-48, embodiments 2-3, and tables 2-3 | 1-15 |
| Y | CN 109371325 A (BAOSHAN IRON & STEEL CO., LTD.) 22 February 2019 (2019-02-22) description, paragraphs 33-48, embodiment 3, and tables 2-3 | 1-15 |
| Y | EP 2664682 A1 (THYSSENKRUPP STEEL EUROPE AG.) 20 November 2013 (2013-11-20) claims 1-4, and table 4 | 1-15 |
| Y | JP 2014122398 A (NIPPON STEEL & SUMITOMO METAL CORP.) 03 July 2014 (2014-07-03) claims 1-4 | 1-15 |
| Y | JP 2015196890 A (HONDA MOTOR CO., LTD.) 09 November 2015 (2015-11-09) claims 1-3, and embodiments 1-2 | 1-15 |
| Y | JP 2014118613 A (NIPPON STEEL & SUMITOMO METAL CORP.) 30 June 2014 (2014-06-30) claims 1-6 | 1-15 |
| A | CN 104271789 A (KOBE STEEL, LTD.) 07 January 2015 (2015-01-07) entire document | 1-15 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 June 2022** | **27 July 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/090627** |

**C.      DOCUMENTS CONSIDERED TO BE RELEVANT**

| Category* | Citation of document, with indication, where appropriate, of the relevant passages | Relevant to claim No. |
|---|---|---|
| A | CN 106282873 A (BAOSHAN IRON & STEEL CO., LTD.) 04 January 2017 (2017-01-04) entire document | 1-15 |

Form PCT/ISA/210 (second sheet) (January 2015)

**EP 4 332 246 A1**

| INTERNATIONAL SEARCH REPORT | International application No. |
| --- | --- |
| Information on patent family members | **PCT/CN2022/090627** |

| Patent document cited in search report | | | Publication date (day/month/year) | Patent family member(s) | | | Publication date (day/month/year) |
| --- | --- | --- | --- | --- | --- | --- | --- |
| CN | 109371325 | A | 22 February 2019 | WO | 2020108594 | A1 | 04 June 2020 |
| EP | 2664682 | A1 | 20 November 2013 | | None | | |
| JP | 2014122398 | A | 03 July 2014 | | None | | |
| JP | 2015196890 | A | 09 November 2015 | | None | | |
| JP | 2014118613 | A | 30 June 2014 | | None | | |
| CN | 104271789 | A | 07 January 2015 | KR | 20160054035 | A | 13 May 2016 |
| | | | | JP | 2014159624 | A | 04 September 2014 |
| | | | | MX | 2014012798 | A | 14 April 2015 |
| | | | | WO | 2013161831 | A1 | 31 October 2013 |
| | | | | JP | 2014185395 | A | 02 October 2014 |
| | | | | CN | 106756697 | A | 31 May 2017 |
| | | | | US | 2016032439 | A1 | 04 February 2016 |
| | | | | US | 2015125716 | A1 | 07 May 2015 |
| | | | | KR | 20140136509 | A | 28 November 2014 |
| | | | | EP | 2843077 | A1 | 04 March 2015 |
| CN | 106282873 | A | 04 January 2017 | | None | | |

Form PCT/ISA/210 (patent family annex) (January 2015)

**REFERENCES CITED IN THE DESCRIPTION**

**Patent documents cited in the description**

- CN 107810281 B
- CN 105829562 B
- CN 104838030 B